# EUROPEAN PATENT SPECIFICATION

(11) **EP 0 650 057 B1**
(45) Date of publication and mention of the grant of the patent: **25.08.1999**
(21) Application number: 94307761.0
(22) Date of filing: 21.10.1994
(51) Int. Cl.: G01P 1/02, G01P 3/48

(54) **Engine revolution counter**
Motordrehzahlmesser
Tachymètre pour moteur

(30) Priority: 21.10.1993 JP 6142393 U
(43) Date of publication of application: 26.04.1995
(73) Proprietor: OPPAMA INDUSTRY CO., LTD., Yokosuka-shi, Kanagawa-ken (JP)
(72) Inventor: Take, Shigeo, c/o Oppama Industry Co. Ltd., Kanagawa-ken (JP); Watanabe, Hiromi, c/o Oppama Industry Co. Ltd., Kanagawa-ken (JP)
(74) Representative: Leckey, David Herbert

(56) References cited:
- EP-A- 0 439 996
- DE-U- 9 302 549
- GB-A- 958 060

## Description

The present invention relates to an engine revolution counter capable of being used for measurement of the number of revolutions of an internal combustion engine having from one cylinder up to twelve cylinders, for example.

A rotating speed meter of an engine, a so-called tachometer, is installed on the dash board display of a vehicle such as a car, so that a driver can read directly the number of revolutions per minute (r.p.m.) of the engine whilst the car is either stationary or in motion.

An analog display is usually used for the purpose but a digital display such as a segmented bar display, or a pattern display at 100 rpm intervals, may also, for example, be used. These types of displays suffice for monitoring of normal driving situations.

However, for special vehicles such as racing cars, for example, there are situations where a driver and mechanics may wish to determine, in real time, the r.p.m. of the engine in more detail, either in the car or from outside the car, to monitor the condition of the engine. In particular the driver may wish to monitor the r.p.m. of the engine as well as a lap time, a split time, a clock, total driving time and the like. However it may be difficult to achieve this with conventional tachometers, as presently installed in vehicles.

The present invention seeks to provide an engine revolution counter capable of displaying simultaneously the number of revolution of the engine as well as other necessary measured data such as lap time, split time and so on.

EP-A-0439996 (Environmental Systems Products Inc.) discloses an engine revolution counter comprising a main body part, said main body part comprising means for measuring the revolutions of an engine, display means for displaying the revolutions measured and selected other data, display mode switch operating members and first electrical terminal means.

The invention is characterised in that said counter also comprises a mount to which said main body part may be removably mounted, said mount comprising second electrical terminal means for connection to said first terminal means, said counter also having means for connection to an external power source, and in that selected first and second terminals are electrically connected to external measuring mode setting switch means, and to mode setting circuitry inside the counter, whereby the display mode may be set by operating the switch operating members and/or by the external switch means.

In a preferred embodiment, the engine revolution counter according to the present invention comprises a mount having first electric source terminals for connection to a supply of electric power from outside and first measuring mode setting terminals for connection to external mode setting switching means, a measuring part main body mountable to the mount in a freely attachable and detachable manner and being provided with measuring mode setting switch operating means on the periphery thereof, a display part for displaying measured results on a central front part thereof and a measuring function for measuring the number of revolutions of the engine, with second electric source terminals to be connected to the first electric source terminals and second measuring mode setting terminals to be connected to the first measuring mode setting terminals being provided on this measuring part main body.

A counter according to the present invention may therefore display the number of revolutions of the engine on a display part such as a liquid crystal panel or the like, for example, even at night by supplying a back light with external electric power supplied through the first electric source terminals for supply of electric power from outside and the second electric source terminals and to show desired mode data by switching operation of externally provided measuring mode switches after the measuring part main body is installed onto the mount provided in a given position. It may also allow measurements of the number of revolutions of the engine and the display of desired mode data as mentioned above by electric power supplied from an internal battery after the measuring part main body is removed from the mount. The display mode can still be selected by the switch operating means on the main body which operates switches within the main body.

The engine revolution counter may be operated in a vehicle or from the outside the vehicle, and is capable of providing simultaneously the number of revolutions of the engine as well as desired measurement data such as lap times and the split time of the vehicle.

A preferred embodiment of the invention will now be described by way of example only with reference to the accompanying drawings in which:
Fig. 1 is a front view showing an engine revolution counter according to one embodiment of the present invention;
Fig. 2 is a back view of a measuring part main body of the engine revolution counter shown in fig. 1;
Fig. 3 is a cross sectional view of the engine revolution counter of Fig. 1;
Fig. 4 is a back view of the engine revolution counter of Figs. 1 to 3;
Fig. 5 is a front view of a mount of the engine revolution counter shown in Fig. 3;
Fig. 6 is an illustration showing a method of using an engine revolution counter according to the present invention; and
Fig. 7 is an illustration showing a further example of use of the engine revolution counter according to the present invention.

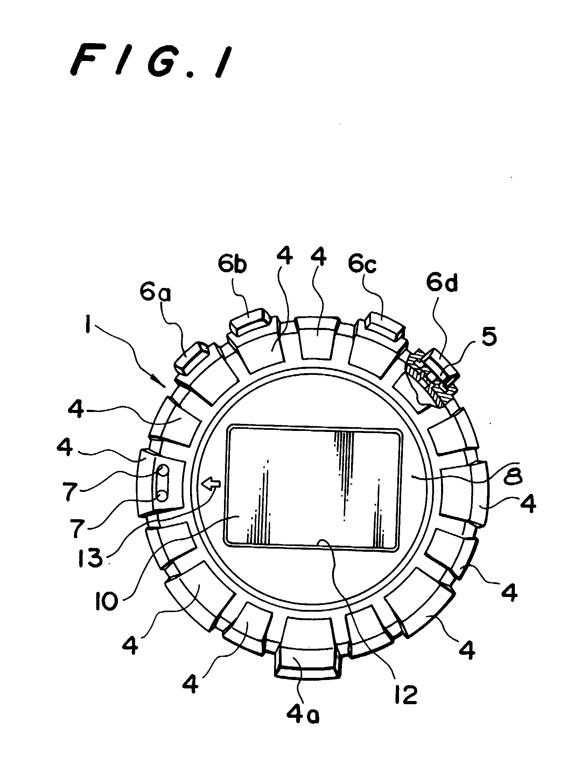

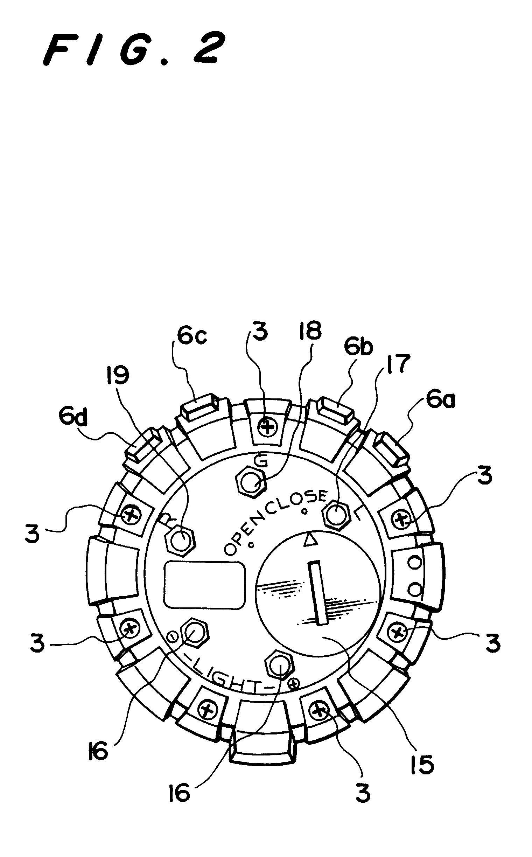

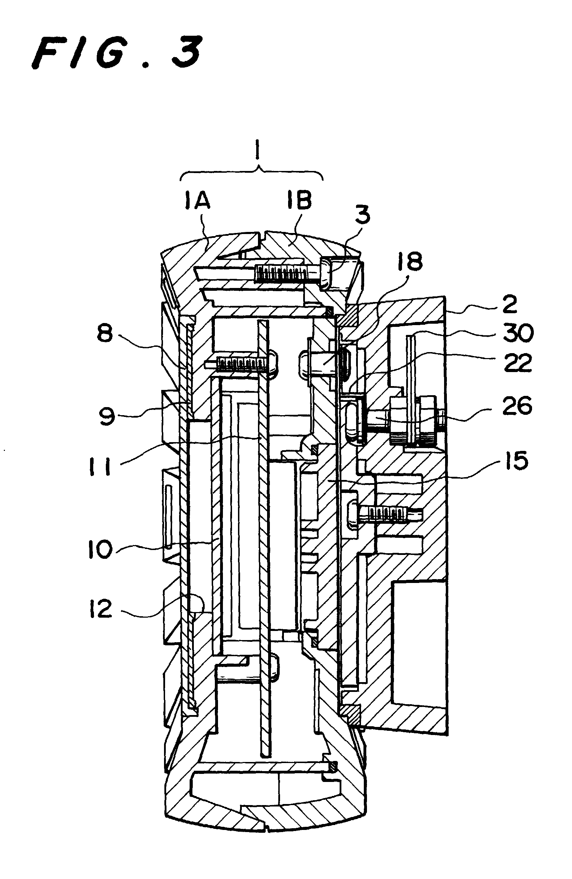

In Figs. 1 through 5, numeral 1 is a measuring part main body having a substantially round shape, and 2 is a mount to which the main body 1 readily attached and detached. This measuring part main body 1 comprises a front casing 1A and a rear casing 1B which are detachably joined together at several positions by screws 3.

The front casing 1A is provided with a rectangular window 12 in a central part thereof, and has a shape generally similar to a vehicle tire, having several tread-like parts 4 formed around its edge and peripheral surface. Tread-like part 4a is used as a holder for a cord, or the like.

In order to operate switches (not shown in the drawings) provided within the main body 1 through a button stem 5 as shown in Fig. 1, measuring mode setting switch buttons 6a to 6d are provided on some of the tread parts 4 so as to protrude therefrom. By operating the mode setting switches it is possible to change the display mode to display a selected measurement such as lap time, engine r.p.m. and so on, and also to reset such measurements.

Numerals 7 are antenna lead holes provided to extend through one of the tread-like parts 4. An induction coil (not shown in the drawings) to induce and receive ignition pulse signals from the antenna lead, and a micro-processor (also not shown in the drawings) for computing the engine's r.p.m. are provided near the antenna lead holes 7 inside the measuring part main body 1.

Numeral 8 is a protective plate provided in the central part of the surface of the front casing 1A. An arrow 13 on the plate 8, adjacent the antenna holes 7 indicates the position of the induction coil within the body 1. A generally ring-shaped face plate 9, on which measuring modes to be selected by the measuring mode setting switch buttons 6a to 6d, the units of the revolution measurements, operational directions as well as the name of manufacturer and the like are indicated, is provided on the inner face of the protective plate 8.

Inside the face plate 9, a display panel 10 such as, for example, a liquid crystal panel or the like, is provided to display the number of revolutions of the engine, time, current clock and the like through the protective plate 8. Further inside the display panel 10 of the front casing 1A is provided a substrate circuit board 11 for connecting to the induction coil, switches, an internal battery (not shown) and other internal components of the counter.

The rear casing 1B, has a battery cover 15 which covers rear casing an internal battery (not shown). The rear casing 1B also has terminals 16 for supplying electrical power to a back light (not shown) mounted inside the main body, and which is capable of illuminating the data displayed on the display panel 10 even at night time. Numerals 17 through 19 are measuring mode setting terminals which are connected to respective measuring mode setting circuits inside the main body 1.

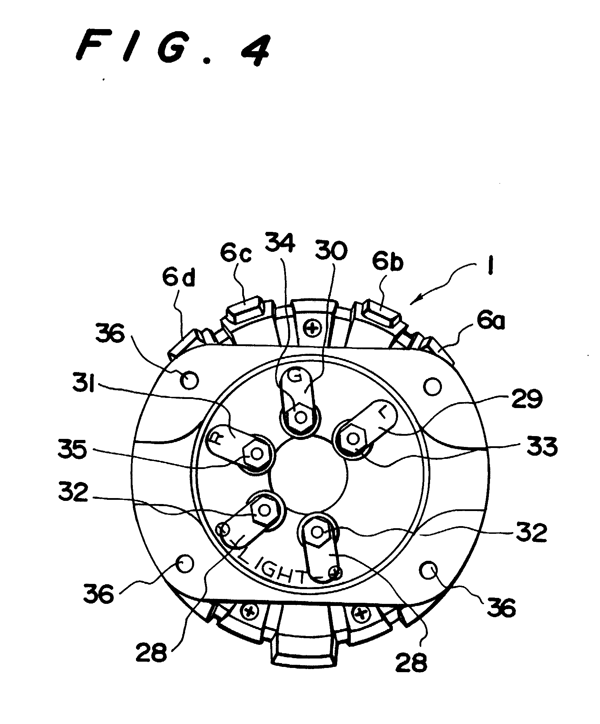

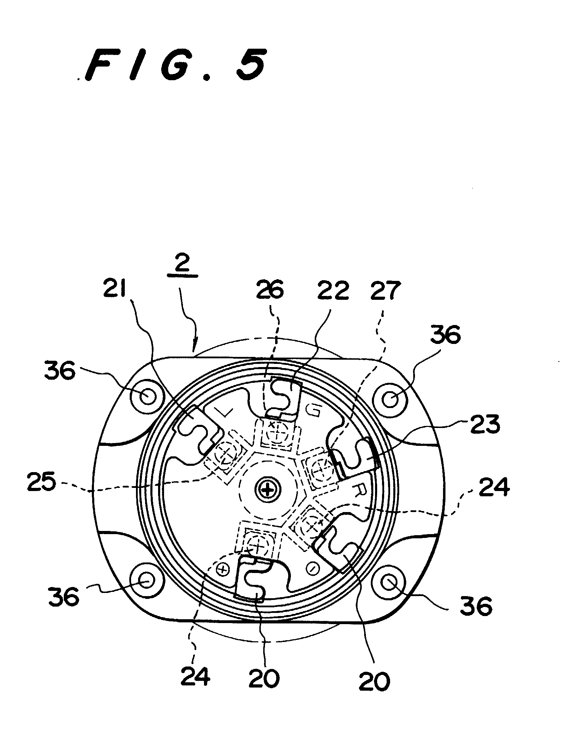

Figs. 4 and 5 show the back and the front faces of the mount 2, respectively. On the front face, hook-like electrical terminals 20 and measuring mode setting terminals 21 to 23 are provided in order to engage with each of terminals 16 through 19 on the main body 1 when the measuring part main body 1 is mounted thereto. The main body 1 is mounted to the mount 2 by being located thereagainst and turned so that the hook-like terminals 20-23 engage over the ends of the stud-like terminals 16-19.

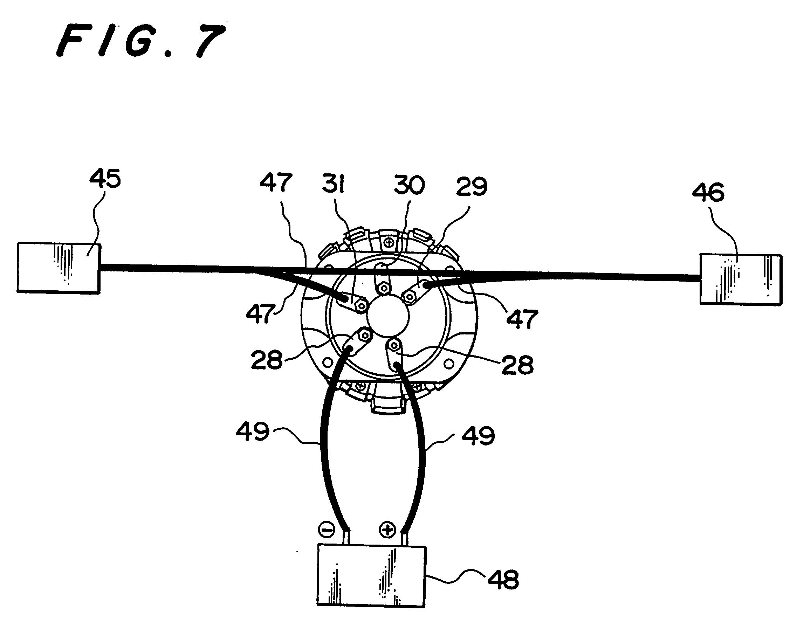

The terminals 20 through 23 are fixed in the mount 2 by screws 24 through 27, the other end of which screws 24 through 27 protrude from the back face of the mount 2, and to which are fixed lug terminal assemblies 28 through 31 is fixed by means of nuts 32 through 35, as shown in Fig. 4. In use, external mode setting switches (45, 46, Fig. 7) may be connected to the lug terminal assemblies. The mount 2 is affixed in a desired position through mounting holes 36.

In the engine revolution counter described above ignition pulses made during rotation of the engine can be transmitted to the induction coil in the measuring part main body 1 by placing the measuring part main body 1, integrally with the mount 2 or separately therefrom, so that the arrow mark 13 is positioned close to an ignition cable (not shown in the drawings) connected to a spark plug, or by placing the same in advance in a desired location in the engine compartment.

The number of revolutions of the engine can be computed by the micro-processor (not shown in the drawings) from the number of pulses measured by the counter, and the result displayed on the display panel 10 and read directly through the protective plate 8.

In addition to the number or revolutions of the engine, other data such as the lap time, split time, driving time (based on a stop watch), current clock and other time data can be displayed independently or simultaneously.

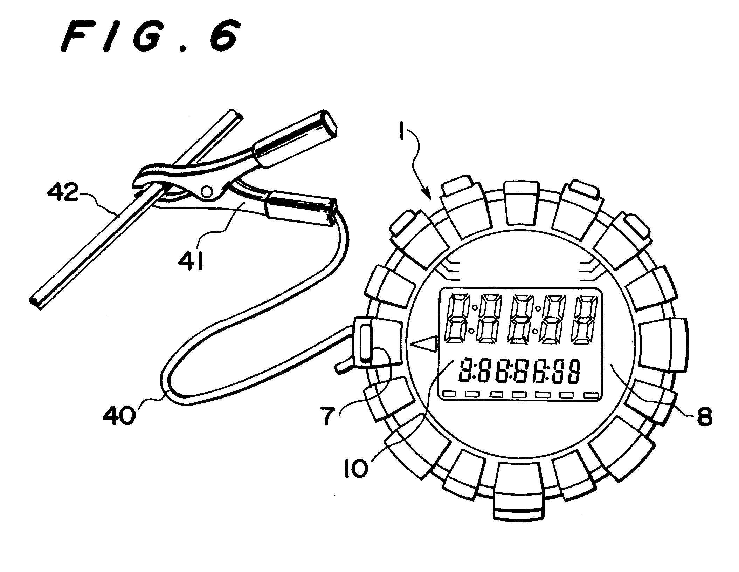

Since the measuring part main body 1 can be removed from its mount 2, if as shown in Fig. 6 one end of an antenna lead 40 is inserted into the antenna lead holes 7 of the tread-like part 4 so as to be held therein, and the other end of the antenna lead 40 is connected to an ignition cable 42 through say a crocodile clip 41, the number of revolutions of the engine can be determined from the sensed ignition pulses in similar way to that mentioned above.

To re-attach the measuring part main body 1 to the mount 2, the measuring part main body 1 is placed on the mount 2 and turned so that each of terminals 16 through 19 of the measuring part main body 1 engages the corresponding connecting terminals 20 through 23 of the mount 2.

To attach the measuring part main body for example on a steering wheel operated by a driver, for example, the measuring part main body 1 and the mount 2 may be fixed in an appropriate place, for example near a central part of the steering wheel. As shown in Fig. 7, each of the measuring mode setting switches 45 and 46 is connected to lug terminal assemblies 29, 30 and 31 shown in Fig. 4 through leads 47 and the other lug terminal assemblies 28 for an external power source are connected to the vehicle battery 48 through leads 49. The switches 45, 46 are mounted in a convenient location for operation by a driver, for example on the periphery of the steering wheel. A suitable antenna may be inserted in the holes 7 to allow measurement of the engine r.p.m.. The driver can then monitor the display of the number of revolutions of the engine as mentioned above and operate each of the switches 45 and 46 by his finger pressing on buttons (not shown) of the switches 45, 46 while still holding the steering wheel with both hands so that necessary data for driving such as said lap time, split time and the like can be shown on the display panel 10.

The tachometer is not limited to application on cars, as described in the paragraph above, but is equally suited to use other vehicles such as motor cycles.

## Claims

1. An engine revolution counter comprising a main body part (1), said main body part (1) comprising means for measuring the revolutions of an engine, display means (10) for displaying the revolutions measured and selected other data, display mode switch operating members (6) and first electrical terminal means (16-19), characterised in that said counter also comprises a mount (2) to which said main body part may be removably mounted, said mount (2) comprising second electrical terminal means (20-23) for connection to said first terminal means (16-19), said counter also having means (16) for connection to an external power source, and in that selected first and second terminals (17,18,19; 21,22,23) are electrically connected to external measuring mode setting switch means (45), and to mode setting circuitry inside the counter, whereby the display mode may be set by operating the switch operating members (6) and/or by the external switch means (45, 46).

2. A counter as claimed in claim 1 wherein said means for measuring the number of revolutions of said engine comprises an induction coil, for sensing pulses of electrical energy produced in said engine, said counter further comprising calculating means to calculate from the measured pulses a desired revolution figure, for example r.p.m.

3. A counter as claimed in claim 2 wherein means are provided for mounting a lead which can transmit said pulses adjacent to said inductive coil.

4. A counter as claimed in claim 3 wherein said means comprises a number of holes (7) through which said lead may be passed.

5. A counter as claimed in any preceding claim further comprising lighting means for illuminating said display means, said lighting means being electrically connected to selected first terminal means (16), for the supply of said external power source thereto.

6. A counter as claimed in any preceding claim wherein said switch operating members (6) are arranged peripherally of said main body part (1).

7. A counter as claimed in any preceding claim further having an internal battery.

8. An engine revolution counter as claimed in claim 1, wherein said second electrical terminal means comprise second electric source terminals (28) for connection to a supply of external electric power and second measuring mode setting terminals (29-31) for connection to external mode setting switch means, said setting switch members (6) are arranged on the periphery of the main body (1), said display means is a display panel (10) on a front face thereof for displaying measured results, and said first electrical terminal means comprise first electric source terminals (16) and first measuring mode setting terminals (17-19) connected respectively to said second electric source terminals (25) and second measuring mode setting terminals (29-31).

## Patentansprüche

1. Motordrehzahlmesser, aufweisend einen Hauptkörperteil (1), wobei der Hauptkörperteil (1) eine Einrichtung zum Messen der Motordrehzahl aufweist, eine Anzeigeeinrichtung (10) zum Anzeigen der gemessenen Drehzahl sowie weiterer ausgewählter Daten, Anzeigebetriebsartschalterbetätigungselemente (6) und erste elektrische Anschlußeinrichtungen (16 bis 19), dadurch gekennzeichnet, daß der Drehzahlmesser außerdem eine Halterung (2) aufweist, an welcher der Hauptkörperteil angebracht werden kann, wobei die Halterung (2) zweite elektrische Anschlußeinrichtungen (20 bis 23) zur Verbindung mit den ersten Anschlußeinrichtungen (16 bis 19) aufweist, wobei der Drehzahlmesser außerdem eine Einrichtung (16) zur Verbindung mit einer externen Stromquelle aufweist, und daß ausgewählte erste und zweite Anschlüsse (17, 18, 19; 21, 22, 23) elektrisch mit externen Meßbetriebsarteinstellschalteinrichtungen (45) und einer Betriebsarteinstellschaltung innerhalb des Drehzahlmessers verbunden sind, wodurch die Anzeigebetriebsart durch Betätigen der Schalterbetätigungselemente (6) und/oder durch die externen Schaltereinrichtungen (45, 46) eingestellt werden kann.

2. Drehzahlmesser nach Anspruch 1, wobei die Einrichtung zum Messen der Drehzahl des Motors eine Induktionsspule zum Erfassen von elektrischen Energieimpulsen, erzeugt in dem Motor, aufweist, wobei der Drehzahlmesser außerdem eine Berechnungseinrichtung aufweist, um aus den gemessenen Impulsen eine gewünschte Umdrehungsgröße, beispielsweise UpM zu berechnen.

3. Drehzahlmesser nach Anspruch 2, wobei eine Einrichtung zum Anbringen einer Leitung zum Übertragen der Impulse benachbart zu der Induktionsspule angeordnet ist.

4. Drehzahlmesser nach Anspruch 3, wobei die Einrichtung eine Anzahl von Löchern (7) aufweist, durch welche die Leitung hindurchtreten kann.

5. Drehzahlmesser nach einem der vorangehenden Ansprüche, außerdem aufweisend eine Beleuchtungseinrichtung zum Beleuchten der Anzeigeeinrichtung, wobei die Beleuchtungseinrichtung elektrisch mit einer ausgewählten ersten Anschlußeinrichtung (16) zur Stromversorgung von der externen Stromquelle verbunden ist.

6. Drehzahlmesser nach einem der vorangehenden Ansprüche, wobei die Schalterbetätigungselemente (6) rand- bzw. umfangsseitig am Hauptteilkörper (1) angebracht sind.

7. Drehzahlmesser nach einem der vorangehenden Ansprüche, außerdem aufweisend eine interne Batterie.

8. Drehzahlmesser nach Anspruch 1, wobei die zweiten elektrischen Anschlußeinrichtungen zweite elektrische Stromquellenanschlüsse (28) zur Verbindung mit einer Stromversorgung von einer externen elektrischen Stromversorgung und zweite Meßbetriebsarteinstellanschlüsse (29 bis 31) zur Verbindung mit der externen Betriebsarteinstellschaltereinrichtung aufweisen, wobei die Einstellschalterelemente (6) auf der Peripherie bzw. dem Umfang des Hauptkörpers (1) angeordnet sind, wobei die Anzeigeeinrichtung eine Anzeigetafel 10 ist, auf deren Vorderseite Meßergebnisse angezeigt werden, und die erste elektrische Anschlußeinrichtung erste elektrische Stromquellenanschlüsse (16) und erste Meßbetriebsarteinstellanschlüsse (17 bis 19) aufweist, die jeweils mit den zweiten elektrischen Stromquellenanschlüssen 25 und den zweiten Meßbetriebsarteinstellanschlüssen (29 bis 31) verbunden sind.

## Revendications

1. Compteur de tours de moteur comprenant une partie formant corps principal (1), ladite partie formant corps principal (1) comprenant des moyens de mesure du nombre de tours d'un moteur, des moyens d'affichage (10) pour afficher le nombre de tours mesuré et d'autres données sélectionnées, des éléments d'actionnement de commutateurs de mode d'affichage (6) et des premiers moyens formant bornes électriques (16-19), caractérisé en ce que ledit compteur comprend également un support de montage (2) sur lequel ladite partie formant corps principal peut être montée de façon à pouvoir être enlevée, ledit support de montage (2) comprenant des seconds moyens formant bornes électriques (20-23) pour la connexion auxdits premiers moyens formant bornes (16-19), ledit compteur possédant également des moyens (16) de connexion à une source d'énergie extérieure, et en ce que ces premières et secondes et bornes sélectionnées (17,18,19 ; 21,22,23) sont connectées électriquement à des moyens extérieurs de commutation de mise en oeuvre de mode de mesure (45), et à un circuit de mise en oeuvre de mode qui se trouve à l'intérieur du compteur, grâce à quoi le mode d'affichage peut-être mis en oeuvre en actionnant les éléments d'actionnement de commutateurs (6) et/ou grâce aux moyens de commutation extérieurs (45,46).

2. Compteur selon la revendication 1, dans lequel lesdits moyens de mesure du nombre de tours dudit moteur comprennent une bobine d'induction, pour détecter les impulsions d'énergie électrique produites dans ledit moteur, ledit moteur comprenant en outre des moyens de calcul pour calculer à partir des impulsions mesurées une représentation souhaitée de la rotation, par exemple en t/mn.

3. Compteur selon la revendication 2, dans lequel des moyens sont prévus pour le montage d'un fil conducteur, lequel peut transmettre lesdites impulsions au voisinage de ladite bobine d'impulsion.

4. Compteur selon la revendication 3, dans lequel lesdits moyens comprennent un certain nombre de trous (7) à travers lesquels ledit fil conducteur peut être passé.

5. Compteur selon l'une quelconque des revendications précédentes, comprenant en outre des moyens d'éclairage pour éclairer lesdits moyens d'affichage, lesdits moyens d'éclairage étant connectés électriquement aux premiers moyens formant bornes sélectionnés (16), pour l'alimentation de ceux-ci par ladite source d'énergie extérieure.

6. Compteur selon l'une quelconque des revendications précédentes, dans lequel lesdits éléments d'actionnement de commutateur (6) sont installés sur la périphérie de ladite partie formant corps principal (1).

7. Compteur selon l'une quelconque des revendications précédentes possédant en outre une batterie intérieure.

8. Compteur de tours de moteur selon la revendication 1, dans lequel lesdits seconds moyens formant bornes électriques comprennent des secondes bornes électriques d'alimentation (28) pour la connexion à une source d'énergie électrique extérieure et des secondes bornes de mise en oeuvre de mode de mesure (29-31) pour la connexion aux moyens extérieurs de commutation de mise en oeuvre de mode, lesdits éléments de commutation de mise en oeuvre (6) sont installés sur la périphérie du corps principal (1), lesdits moyens d'affichage sont un tableau d'affichage (10) qui se trouve sur une face frontale de celui-ci pour l'affichage des résultats mesurés, et dans lequel lesdits premiers moyens formant bornes électriques comprennent des premières bornes électriques d'alimentation (16) et des premières bornes de mise en oeuvre de mode de mesure (17-19) connectées respectivement auxdites secondes bornes électriques d'alimentation (25) et auxdites secondes bornes de mise en oeuvre de mode de mesure (29-31).
